# EUROPÄISCHE PATENTANMELDUNG

(11) **EP 3 567 067 A1**
(43) Veröffentlichungstag der Anmeldung: **13.11.2019**
(21) Anmeldenummer: 18171360.3
(22) Anmeldetag: 08.05.2018
(51) Int. Cl.: C08G 65/26, C08G 65/30, C07C 41/34, C08G 64/40

(54) **ABTRENNUNG VON DOPPELMETALLCYANID-KATALYSATOR**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Gegenstand der Erfindung ist ein Verfahren zur Abtrennung eines Doppelmetallcyanid-Katalysators (DMC-Katalysators) aus Polyol, umfassend die Schritte
A) Vorlegen eines Polyols enthaltend DMC-Katalysator, eines Alkohols und gegebenenfalls einer Filterhilfe in einen Reaktor, wobei das Gemisch erwärmt wird,
B) Filtration des Gemischs aus Schritt A),
C) gegebenenfalls Abtrennen des Alkohols aus dem Filtrat des Schrittes B), dadurch gekennzeichnet, dass
in Schritt A) als Alkohol 4 Gew.-% bis 12 Gew.-% Ethanol, bezogen auf 100 Gew.-% Polyol, ohne einen Chelatbildner eingesetzt werden.

## Beschreibung

Diese Erfindung betrifft ein Verfahren zur Abtrennung eines Doppelmetallcyanid-Katalysators (im Folgenden auch DMC-Katalysator genannt) aus Polyolen.

DMC-Katalysatoren werden bei der Herstellung von Polyolen, wie beispielsweise Polyetherpolyolen oder Polyethercarbonatpolyolen, verwendet. Diese Katalysatoren weisen eine hohe Effizienz bei der Polymerisation auf, wodurch der Anteil an eingesetztem Katalysator gering gehalten werden kann. Trotz des geringen Anteils an DMC-Katalysator im Polyol, ist die Lagerstabilität CO₂-haltiger Polyole durch Reste von aktivem DMC-Katalysator im Polyol verringert. Aus diesem Grund, sowohl als auch auf Grund der Zusammensetzung des DMC-Katalysators aus Metall-Verbindungen, wie beispielsweise Kobaltverbindungen, ist eine Abtrennung wünschenswert.

Eine gängige Methode zur Abtrennung des DMC-Katalysators vom Polyol ist die Filtration, wobei in einem vorgelagerten Schritt der DMC-Katalysator in einen unlöslichen Zustand überführt wird. Die Patentschrift US 5,416,241 offenbart für diesen vorgelagerten Schritt die Verwendung von Alkalimetallhydroxiden, Wasser und Magnesiumsilikat. US 5,099,075 beschreibt die Abtrennung des DMC-Katalysators durch dessen Oxidation mit beispielsweise Wasserstoffperoxid und nachfolgender Filtration. In US 5,248,833 wird ein Alkohol in Kombination mit einem sauren Chelatbildner verwendet um den DMC-Katalysator anschließend zu filtrieren.

Der Einsatz solcher reaktiven Verbindungen ist aus sicherheitsrelevanten, ökologischen und ökonomischen Aspekten nicht wünschenswert und kann ebenfalls negative Effekte auf das Polyol haben. Beispielsweise kann der Einsatz von Alkalimetallsalzen bei Polyethercarbonatpolyolen zur Spaltung der Carbonatgruppe im Polyethercarbonatpolyol führen und somit die molekulare Gewichtsverteilung des Polyethercarbonatpolyols verbreitern.

In EP 0 385 619 A2 wird der DMC-Katalysator durch Zugabe eines unpolaren Lösungsmittels unlöslich gemacht und anschließend filtriert. Es werden in EP 0 385 619 A2 jedoch mindestens 50 Gew.-%, bezogen auf das Polyol, eines unpolaren Lösungsmittels eingesetzt. Die Verwendung und anschließende Abtrennung dieser Mengen an Lösungsmitteln ist jedoch unwirtschaftlich.

Die Aufgabe der vorliegenden Erfindung ist somit die Bereitstellung eines wirtschaftlichen Verfahrens zur Abtrennung eines DMC-Katalysators ohne Einsatz eines Chelatbildners, welches zu keinen oder nur unwesentlichen Änderungen am Polyol führt.

Überraschenderweise wurde diese Aufgabe gelöst durch ein Verfahren zur Abtrennung eines Doppelmetallcyanid-Katalysators (DMC-Katalysators) aus Polyol, umfassend die Schritte
A) Vorlegen eines Polyols enthaltend DMC-Katalysator, eines Alkohols und gegebenenfalls einer Filterhilfe in einen Reaktor, wobei das Gemisch erwärmt wird,
B) Filtration des Gemischs aus Schritt A),
C) gegebenenfalls Abtrennen des Alkohols aus dem Filtrat des Schrittes B),
dadurch gekennzeichnet, dass
in Schritt A) als Alkohol 4 Gew.-% bis 12 Gew.-% Ethanol, bezogen auf 100 Gew.-% Polyol, ohne einen Chelatbildner eingesetzt werden.

Im Folgenden sind die im erfindungsgemäßen Verfahren durchgeführten Schritte näher beschrieben.

### Schritt A)

Das Polyol enthaltend DMC-Katalysator ist ein Polyetherpolyol, Polyetheresterpolyol, Polyethercarbonatpolyol oder eine Mischung aus den zuvor genannten Verbindungen. Bevorzugt ist das Polyol ein Polyethercarbonatpolyol.

Polyethercarbonatpolyole werden durch Anlagerung von Alkylenoxid und Kohlendioxid an eine H-funktionelle Starterverbindung in Gegenwart eines DMC-Katalysators hergestellt, bevorzugt durch die Schritte:
(a) Vorlegen einer Teilmenge der H-funktionellen Starterverbindungen und/oder Suspensionsmittel, das keine H-funktionellen Gruppen enthält, in einen Reaktor jeweils gemeinsam mit DMC-Katalysator und gegebenenfalls Entfernen von Wasser und/oder anderen leicht flüchtigen Verbindungen durch erhöhte Temperatur und/oder reduziertem Druck ("Trocknung"),
(β) Aktivierung des DMC-Katalysators durch Zugabe einer Teilmenge (bezogen auf die Gesamtmenge der bei der Aktivierung und Copolymerisation eingesetzten Menge an Alkylenoxid) von Alkylenoxid zu der aus Schritt (α) resultierenden Mischung , wobei diese Zugabe einer Teilmenge an Alkylenoxid gegebenenfalls in Gegenwart von CO₂ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann,
(γ) Zugabe von Alkylenoxid und Kohlendioxid zu der aus Schritt (β) resultierenden Mischung, wobei das in Schritt (β) eingesetzte Alkylenoxid gleich oder verschieden sein kann von dem bei Schritt (γ) eingesetzten Alkylenoxid und wobei gegebenenfalls H-funktionelle Starterverbindungen sowie DMC-Katalysator während der Anlagerung kontinuierlich in den Reaktor zudosiert werden.

Der hier verwendete Begriff "kontinuierlich" kann als Modus der Zugabe eines Reaktanden so definiert werden, dass eine für die Copolymerisation wirksame Konzentration des Reaktanden aufrechterhalten wird, d.h. beispielsweise kann die Dosierung mit einer konstanten Dosierrate, mit einer variierenden Dosierrate oder portionsweise erfolgen.

Allgemein können zur Herstellung eines Polyethercarbonatpolyols Alkylenoxide (Epoxide) mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein-oder mehrfach epoxidierte Fette als Mono-, Di- und Triglyceride, epoxidierte Fettsäuren, C₁-C₂₄-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkoxysilane, wie beispielsweise 3-Glycidyloxypropyltrimethoxysilan, 3-Glycidyioxypropyl-triethoxysilan, 3-Glycidyloxypropyltripropoxysilan, 3-Glycidyloxypropyl-methyl-dimethoxysilan, 3-Glycidyloxypropylethyldiethoxysilan, 3-Glycidyloxypropyltrlisopropoxysilan. Vorzugsweise werden als Alkylenoxide Ethylenoxid und/oder Propylenoxid und/oder 1,2 Butylenoxid, besonders bevorzugt Propylenoxid eingesetzt.

Als geeignete H-funktionelle Starterverbindung können Verbindungen mit für die Alkoxylierung aktiven H-Atomen eingesetzt werden. Für die Alkoxylierung aktive Gruppen mit aktiven H-Atomen sind beispielsweise -OH, -NH₂ (primäre Amine), -NH- (sekundäre Amine), -SH und -CO₂H, bevorzugt sind -OH und -NH₂, besonders bevorzugt ist -OH.

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, t-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-t-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, t-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Starterverbindungen geeignete mehrwertige Alkohole sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton. In Mischungen von H-funktionellen Starterverbindungen können auch dreiwertige Alkohole, wie beispielsweise Trimethylolpropan, Glycerin, Trishydroxyethylisocyanurat und Rizinusöl eingesetzt werden.

Die H-funktionellen Starterverbindungen können auch aus der Substanzklasse der Polyetherpolyole ausgewählt sein, insbesondere solchen mit einem Molekulargewicht Mₙ im Bereich von 100 bis 4000 g/mol, vorzugsweise 250 bis 2000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Covestro Deutschland AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Starterverbindungen können auch aus der Substanzklasse der Polyesterpolyole ausgewählt sein, insbesondere solchen mit einem Molekulargewicht Mₙ im Bereich von 200 bis 4500 g/mol, vorzugsweise 400 bis 2500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophthalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Starterverbindungen zur Herstellung der Polyethercarbonatpolyole dienen können. Falls Polyetherpolyole zur Herstellung der Polyesteretherpolyole eingesetzt werden, sind Polyetherpolyole mit einem zahlenmittleren Molekulargewicht Mₙ von 150 bis 2000 g/mol bevorzugt.

Des Weiteren können als H-funktionelle Starterverbindungen Polycarbonatpolyole (wie beispielsweise Polycarbonatdiole) eingesetzt werden, insbesondere solchen mit einem Molekulargewicht Mₙ im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und di- und/oder polyfunktionellen Alkoholen oder Polyesterpolyolen oder Polyetherpolyolen hergestellt werden. Beispiele zu Polycarbonatpolyolen finden sich z. B. in der EP-A 1359177. Beispielsweise können als Polycarbonatdiole die Desmophen® C-Typen der Covestro Deutschland AG verwendet werden, wie z. B. Desmophen® C 1100 oder Desmophen® C 2200.

Erfindungsgemäß eingesetzte Polyetherpolyole werden nach dem Fachmann bekannten Herstellungsmethoden erhalten, wie beispielsweise durch anionische Polymerisation von einem oder mehreren Alkylenoxiden mit 2 bis 24 Kohlenstoffatomen unter Verwendung mindestens einer H-funktionellen Starterverbindung, das 2 bis 8, vorzugsweise 2 bis 6 reaktive Wasserstoffatome gebunden enthält.

Als geeignete Alkylenoxide und H-funktionelle Starterverbindungen können die bereits beschriebenen Verbindungen eingesetzt werden.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit 4 bis 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Neben organischen Dicarbonsäuren können auch Derivate dieser Säuren, beispielsweise deren Anhydride sowie deren Ester und Halbester mit niedermolekularen, monofunktionellen Alkoholen mit 1 bis 4 Kohlenstoffatomen eingesetzt werden. Der anteilige Einsatz der oben genannten biobasierten Ausgangsstoffe, insbesondere von Fettsäuren bzw. Fettsäurederivaten (Ölsäure, Sojaöl etc.) ist ebenfalls möglich.

Als weitere Komponente zur Herstellung der Polyetheresterpolyole werden Polyetherpolyole eingesetzt, die wie bereits beschrieben erhalten werden können.

Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoffaktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

Herstellungsverfahren der Polyole sind beispielsweise von Ionescu in "Chemistry and Technology of Polyols for Polyurethanes", Rapra Technology Limited, Shawbury 2005, S.55 ff. (Kap. 4: Oligo-Polyols for Elastic Polyurethanes), S. 263 ff. (Kap. 8: Polyester Polyols for Elastic Polyurethanes) und insbesondere auf S.321 ff. (Kap. 13: Polyether Polyols for Rigid Polyurethane Foams) und S.419 ff. (Kap. 16: Polyester Polyols for Rigid Polyurethane Foams) beschrieben worden. Es ist auch möglich, Polyester- und Polyetherpolyole über Glykolyse von geeigneten Polymer-Rezyklaten zu gewinnen.

Als Suspensionsmittel sind alle polar-aprotischen, schwach polar-aprotischen und unpolaraprotischen Lösungsmittel geeignet, die jeweils keine H-funktionellen Gruppen enthalten. Als Suspensionsmittel können auch eine Mischung aus zwei oder mehrerer dieser Suspensionsmittel eingesetzt werden. Beispielhaft seien an dieser Stelle folgende polar-aprotischen Lösungsmittel genannt: 4-Methyl-2-oxo-1,3-dioxolan (im Folgenden auch als cyclisches Propylencarbonat oder cPC bezeichnet), 1,3-Dioxolan-2-on (im Folgenden auch als cyclisches Ethylencarbonat oder cEC bezeichnet), Aceton, Methylethylketon, Acetonitril, Nitromethan, Dimethylsulfoxid, Sulfolan, Dimethylformamid, Dimethylacetamid und N-Methylpyrrolidon. Zu der Gruppe der unpolar- und schwach polar-aprotischen Lösungsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe, wie z.B. Chloroform, Chlorbenzol, Dichlorbenzol und Tetrachlorkohlenstoff. Bevorzugt als Suspensionsmittel werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on.

DMC-Katalysatoren sind im Prinzip aus dem Stand der Technik zur Homopolymerisation von Epoxiden bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO-A 97/40086, WO-A 98/16310 und WO-A 00/47649 beschrieben sind, besitzen eine sehr hohe Aktivität in der Homopolymerisation von Epoxiden und ermöglichen die Herstellung von Polyetherpolyolen und/oder Polyethercarbonatpolyolen bei sehr geringen Katalysatorkonzentrationen (25 ppm oder weniger). Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. t.-Butanol) noch einen Polyether mit einem zahlenmittlerem Molekulargewicht Mₙ größer als 500 g/mol enthalten.

In Schritt A) wird zum Polyol enthaltend DMC-Katalysator erfindungsgemäß als Alkohol Ethanol in einem Anteil von 4 Gew.-% bis 12 Gew.-%, bezogen auf 100 Gew.-% Polyol, zugegeben. Bevorzugt werden 5 Gew.-% bis 9 Gew.-% Ethanol, bezogen auf 100 Gew.-% Polyol, in Schritt A) eingesetzt.

Gegebenenfalls wird in Schritt A) ein Filterhilfsmittel vorgelegt. Filterhilfsmittel werden beispielsweise eingesetzt um das Verstopfen des Filters zu verhindern. Beispiele für Filterhilfsmittel sind Cellulose, Kieselgel, Aluminiumoxid, Aktivkohle, Kieselgur oder Perlit.

Das Gemisch wird dann in Schritt A) erwärmt, bevorzugt auf eine Temperatur von 80 bis 180 °C, besonders bevorzugt 80 bis 120 °C. Das Gemisch in Schritt A) wird bevorzugt für 100 bis 140 min erwärmt.

Bei der Herstellung von Polyolen in Anwesenheit eines DMC-Katalysators, werden die Polyole nach der Reaktion in einen Nachreaktor überführt damit noch freies Alkylenoxid reagieren kann. Anschließend werden in der Regel durch Destillation nicht reagierte Monomere oder andere leichtflüchtige Bestandteile von den Polyolen abgetrennt. Deswegen wird in einer bevorzugten Ausführungsform dieser Erfindung Schritt A) in einem solchen Nachreaktor durchgeführt, in dem Alkohol und gegebenenfalls Filterhilfe zum Polyol enthaltend DMC-Katalysator in den Nachreaktor vor der Destillation des Polyols zugegeben wird.

### Schritt B)

Das aus Schritt A) resultierende Gemisch wird anschließend filtriert. Methoden zur Filtration sind beispielsweise von T. Sparks in "Solid-Liquid Filtration", Butterworth-Heinemann, Oxford 2011 beschrieben. Bevorzugt wird das Gemisch über ein Tiefenfiltermedium filtriert. Das aus Schritt A) resultierende Gemisch kann dabei mit einer Temperatur von 10 bis 150°C, bevorzugt 80 bis 120 °C filtriert werden. Es ist ebenfalls möglich die Filtration unter Druck durchzuführen, bevorzugt wird dabei ein Druck von 4 bis 8 bar eingestellt.

### Schritt C)

An die Filtration in Schritt B) kann anschließend der Alkohol vom aufgereinigte Polyol mit dem Fachmann bekannten Trennverfahren abgetrennt werden. Zur Abtrennung des Alkohols können beispielsweise thermische Trennverfahren, wie Destillation oder Stripping, oder mechanische Trennverfahren, wie Membranfiltration oder Dialyse, eingesetzt werden. Bevorzugt werden thermische Trennverfahren oder Kombinationen von thermischen und nicht-thermischen Trennverfahren zum Abtrennen des Alkohols eingesetzt. Besonders bevorzugt werden Verdampfungseinrichtungen, wie Fallfilmverdampfer oder Vakuumverdampfer, oder Strippingkolonnen, sowie Kombinationen aus den genannten eingesetzt. Höchst bevorzugt wird ein Fallfilmverdampfer oder Dünnschichtverdampfer verwendet um den Alkohol vom aufgereinigten Polyol zu trennen.

In einer ersten Ausführungsform betriff die Erfindung ein Verfahren zur Abtrennung eines Doppelmetallcyanid-Katalysators (DMC-Katalysators), umfassend die Schritte
A) Vorlegen eines Polyols enthaltend DMC-Katalysator, eines Alkohols und gegebenenfalls einer Filterhilfe in einen Reaktor, wobei das Gemisch erwärmt wird,
B) Filtration des Gemischs aus Schritt A),
C) gegebenenfalls Abtrennen des Alkohols aus dem Filtrat des Schrittes B), dadurch gekennzeichnet, dass
in Schritt A) als Alkohol 4 Gew.-% bis 12 Gew.-% Ethanol, bezogen auf 100 Gew.-% Polyol, ohne einen Chelatbildner eingesetzt werden.

In einer zweiten Ausführungsform betriff die Erfindung ein Verfahren gemäß Ausführungsform 1, dadurch gekennzeichnet, dass das Polyol ein Polyetherpolyol und/oder ein Polyethercarbonatpolyol ist.

In einer dritten Ausführungsform betriff die Erfindung ein Verfahren gemäß Ausführungsform 1 oder 2, dadurch gekennzeichnet, dass in Schritt A) als Alkohol 5 Gew.-% bis 9 Gew.-% Ethanol eingesetzt werden.

In einer vierten Ausführungsform betriff die Erfindung ein Verfahren gemäß einer der Ausführungsformen 1 bis 3, dadurch gekennzeichnet, dass in Schritt A) das Gemisch auf eine Temperatur von 80 °C bis 180°C erwärmt wird.

In einer fünften Ausführungsform betriff die Erfindung ein Verfahren gemäß einer der Ausführungsformen 1 bis 4, dadurch gekennzeichnet, dass in Schritt A) das Gemisch über eine Zeit von 100 min bis 140 min erwärmt wird.

In einer sechsten Ausführungsform betriff die Erfindung ein Verfahren gemäß einer der Ausführungsformen 1 bis 5, dadurch gekennzeichnet, dass in Schritt B) die Filtration bei einer Temperatur von 80°C bis 120°C durchgeführt wird.

In einer siebten Ausführungsform betriff die Erfindung ein Verfahren gemäß einer der Ausführungsformen 1 bis 6, dadurch gekennzeichnet, dass in Schritt B) die Filtration bei einem Druck von 4 bar bis 8 bar durchgeführt wird.

In einer achten Ausführungsform betriff die Erfindung ein Verfahren gemäß einer der Ausführungsformen 1 bis 7, umfassend den Schritt

### C) Abtrennen des Alkohols aus dem Filtrat des Schrittes B).

In einer neunten Ausführungsform betriff die Erfindung ein Verfahren gemäß Ausführungsform 8, dadurch gekennzeichnet, dass der Alkohol in Schritt C) durch eine Verdampfungseinrichtung, eine Strippingkolonne oder eine Kombination aus den genannten abgetrennt wird.

In einer zehnten Ausführungsform betriff die Erfindung ein Verfahren gemäß Ausführungsform 9, dadurch gekennzeichnet, dass die Verdampfungseinrichtung ein Fallfilmverdampfer oder ein Dünnschichtverdampfer ist.

In einer elften Ausführungsform betriff die Erfindung ein Verfahren gemäß einer der Ausführungsformen 1 bis 10, dadurch gekennzeichnet, dass das Polyol ein Polyethercarbonatpolyol ist.

In einer zwölften Ausführungsform betrifft die Erfindung ein Verfahren gemäß Ausführungsform 11, dadurch gekennzeichnet, dass das Polyethercarbonatpolyol hergestellt wird durch Anlagerung von Kohlendioxid und Alkylenoxid an eine H-funktionelle Starterverbindung in Gegenwart eines DMC-Katalysators, gekennzeichnet durch die Schritte:
(α) Vorlegen einer Teilmenge der H-funktionellen Starterverbindung und/oder Suspensionsmittel, das keine H-funktionellen Gruppen enthält, in einen Reaktor jeweils gemeinsam mit DMC-Katalysator und gegebenenfalls Entfernen von Wasser und/oder anderen leicht flüchtigen Verbindungen durch erhöhte Temperatur und/oder reduziertem Druck ("Trocknung"),
(β) Aktivierung des DMC-Katalysators durch Zugabe einer Teilmenge (bezogen auf die Gesamtmenge der bei der Aktivierung und Copolymerisation eingesetzten Menge an Alkylenoxid) von Alkylenoxid zu der aus Schritt (α) resultierenden Mischung, wobei diese Zugabe einer Teilmenge an Alkylenoxid gegebenenfalls in Gegenwart von CO₂ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann,
(γ) Zugabe von Alkylenoxid und Kohlendioxid zu der aus Schritt (β) resultierenden Mischung, wobei das in Schritt (β) eingesetzte Alkylenoxid gleich oder verschieden sein kann von dem bei Schritt (γ) eingesetzten Alkylenoxid und wobei gegebenenfalls H-funktionelle Starterverbindungen sowie DMC-Katalysator während der Anlagerung kontinuierlich in den Reaktor zudosiert werden.

### Experimenteller Teil

### Einsatzstoffe

- Polyol A: Polyethercarbonatpolyol, hergestellt über DMC katalysierte Polymerisation von Propylenoxid in Anwesenheit von CO₂ mit einer Funktionalität von 3, einer OH-Zahl von 56,1 mg KOH/g, 12 Gew.-% eingebautem CO₂ und einer Konzentration von 200 ppm DMC-Katalysator.
- Ethanol: mit 2 Gew.-% Methylethylketon vergälltes Ethanol (Fa. Fluka)

### Allgemeine Versuchsdurchführung

In einem 300 ml Druckreaktor wurden 200 g Polyol A vorgelegt und Ethanol (siehe Tabelle 1) zudosiert. Das Gemisch wurde auf die entsprechende Temperatur erwärmt (siehe Tabelle 1) und für 120 min gerührt (Schritt A)). Anschließend wurde das Gemisch aus Schritt A) aus dem Reaktor entnommen und in eine Drucknutsche zur Filtration überführt. Das Gemisch wurde bei 100°C und 6 bar Druck über eine Becopad® 450 Filterschicht (Dicke: 3,9 mm, Durchmesser: 50 mm, Fläche: 157 mm², Material: Cellulose, Abscheidebereich: 1,0 bis 2,0 µm) der Firma Eaton filtriert (Schritt B)). Das vorhandene Ethanol im Filtrat wurde in einem nachfolgenden Schritt über einen Dünnschichtverdampfer abgetrennt und der Anteil an Co/Zn-Rückständen ermittelt (Schritt C)). Detaillierte Angaben zu den eingesetzten Anteilen an Ethanol und der verwendeten Temperatur in Schritt A) der einzelnen Beispiele sind in der Tabelle 1 angegeben.

Der Anteil an DMC-Katalysator in dem aufgereinigten Polyol A wird durch die enthaltenen Co/Zn-Rückstände in dem aufgereinigten Polyol A bestimmt. Der Anteil an Co/Zn-Rückstand wird durch Elementaranalyse mit optischer Emissionsspektrometrie mittels induktiv gekoppelten Plasmas (ICP-OES) bestimmt. Die ICP-OES wurde mit einem SPECTRO ARCOS der Firma SPECTRO und einem Argon-Plasma durchgeführt. Zur Bestimmung der Co/Zn-Rückstände wurden die Anteile für Co über die Emission bei den Wellenlängen 228,616 nm, 230,786 nm und 238,892 nm, beziehungsweise für Zn bei 202,613 nm, 206,266 nm und 213,856 nm bestimmt.

**Tabelle 1**

| **Beispiele** | | **1*** | **2*** | **3*** | **4*** | **5** | **6*** | **7** |
|---|---|---|---|---|---|---|---|---|
| Polyol A | Gew.-% | 100 | 100 | 100 | 100 | 100 | 100 | 100 |
| Ethanol | Gew.-%¹⁾ | 0 | 1 | 3 | 79 | 7,3 | 3 | 7,3 |
| Temperatur in Schritt A) | °C | 100 | 100 | 100 | 100 | 100 | 130 | 130 |
| Co/Zn-Rückstände | ppm | 19/40 | 15/32 | 7/15 | 14/28 | 2/5 | 9/19 | 4/9 |

| | | | | | | | | |
|---|---|---|---|---|---|---|---|---|
| * Vergleichsbeispiel ¹⁾ bezogen auf das Gesamtgewicht des Polyols | | | | | | | | |

Das Vergleichsbeispiel 1 in Tabelle 1 gibt den Anteil der Co/Zn-Rückstände in Polyol A nach dem erfindungsgemäßen Verfahren an, wobei in Schritt A) kein Ethanol zugegeben wurde. Das erfindungsgemäße Verfahren führt in den Beispielen 5 und 7 zu einer deutlichen Verringerung der Co/Zn-Rückstände in der Polyolkomponente. Im Gegensatz dazu wurden in den Vergleichsbeispielen 2 bis 4 und 6 nicht erfindungsgemäße Mengen an Ethanol in Schritt A) zu der Polyolkomponente zugegeben. Der Anteil an Co/Zn-Rückstände in den Vergleichsbeispielen 2 bis 4 sind gegenüber Beispiel 5, in Vergleichsbeispiel 6 gegenüber Beispiel 7 deutlich erhöht.

## Patentansprüche

1. Verfahren zur Abtrennung eines Doppelmetallcyanid-Katalysators (DMC-Katalysators) aus Polyol, umfassend die Schritte
A) Vorlegen eines Polyols enthaltend DMC-Katalysator, eines Alkohols und gegebenenfalls einer Filterhilfe in einen Reaktor, wobei das Gemisch erwärmt wird,
B) Filtration des Gemischs aus Schritt A),
C) gegebenenfalls Abtrennen des Alkohols aus dem Filtrat des Schrittes B),
**dadurch gekennzeichnet, dass**
in Schritt A) als Alkohol 4 Gew.-% bis 12 Gew.-% Ethanol, bezogen auf 100 Gew.-% Polyol, ohne einen Chelatbildner eingesetzt werden.

2. Verfahren gemäß Anspruch 1, **dadurch gekennzeichnet, dass** das Polyol ein Polyetherpolyol und/oder ein Polyethercarbonatpolyol ist.

3. Verfahren gemäß Anspruch 1 oder 2, **dadurch gekennzeichnet, dass** in Schritt A) als Alkohol 5 Gew.-% bis 9 Gew.-% Ethanol eingesetzt werden.

4. Verfahren gemäß einem der Ansprüche 1 bis 3, **dadurch gekennzeichnet, dass** in Schritt
A) das Gemisch auf eine Temperatur von 80 °C bis 180°C erwärmt wird.

5. Verfahren gemäß einem der Ansprüche 1 bis 4, **dadurch gekennzeichnet, dass** in Schritt
A) das Gemisch über eine Zeit von 100 min bis 140 min erwärmt wird.

6. Verfahren gemäß einem der Ansprüche 1 bis 5, **dadurch gekennzeichnet, dass** in Schritt
B) die Filtration bei einer Temperatur von 80°C bis 120°C durchgeführt wird.

7. Verfahren gemäß einem der Ansprüche 1 bis 6, **dadurch gekennzeichnet, dass** in Schritt
B) die Filtration bei einem Druck von 4 bar bis 8 bar durchgeführt wird.

8. Verfahren gemäß einem der Ansprüche 1 bis 7, umfassend den Schritt
C) Abtrennen des Alkohols aus dem Filtrat des Schrittes B).

9. Verfahren gemäß Anspruch 8, **dadurch gekennzeichnet, dass** der Alkohol in Schritt C) durch eine Verdampfungseinrichtung, eine Strippingkolonne oder eine Kombination aus den genannten abgetrennt wird.

10. Verfahren gemäß Anspruch 9, **dadurch gekennzeichnet, dass** die Verdampfungseinrichtung ein Fallfilmverdampfer oder ein Dünnschichtverdampfer ist.

11. Verfahren gemäß einem der Ansprüche 1 bis 10, **dadurch gekennzeichnet, dass** das Polyol ein Polyethercarbonatpolyol ist.

12. Verfahren gemäß Anspruch 11, **dadurch gekennzeichnet, dass** das Polyethercarbonatpolyol hergestellt wird durch Anlagerung von Kohlendioxid und Alkylenoxid an eine H-funktionelle Starterverbindung in Gegenwart eines DMC-Katalysators, **gekennzeichnet durch** die Schritte:
(α) Vorlegen einer Teilmenge der H-funktionellen Starterverbindung und/oder Suspensionsmittel, das keine H-funktionellen Gruppen enthält, in einen Reaktor jeweils gemeinsam mit DMC-Katalysator und gegebenenfalls Entfernen von Wasser und/oder anderen leicht flüchtigen Verbindungen durch erhöhte Temperatur und/oder reduziertem Druck ("Trocknung"),
(β) Aktivierung des DMC-Katalysators durch Zugabe einer Teilmenge (bezogen auf die Gesamtmenge der bei der Aktivierung und Copolymerisation eingesetzten Menge an Alkylenoxid) von Alkylenoxid zu der aus Schritt (α) resultierenden Mischung , wobei diese Zugabe einer Teilmenge an Alkylenoxid gegebenenfalls in Gegenwart von CO₂ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann,
(γ) Zugabe von Alkylenoxid und Kohlendioxid zu der aus Schritt (β) resultierenden Mischung, wobei das in Schritt (β) eingesetzte Alkylenoxid gleich oder verschieden sein kann von dem bei Schritt (γ) eingesetzten Alkylenoxid und wobei gegebenenfalls H-funktionelle Starterverbindungen sowie DMC-Katalysator während der Anlagerung kontinuierlich in den Reaktor zudosiert werden.
